# EUROPEAN PATENT APPLICATION

(11) **EP 4 830 792 A1**
(43) Date of publication of application: **28.10.2026**
(21) Application number: 25194300.7
(22) Date of filing: 06.08.2025
(51) Int. Cl.: A62C 31/28

(54) **APPARATUS AND METHOD FOR GENERATING WATER GUN TRAJECTORY TO MITIGATE INACCURACIES AND UNCERTAINTY IN EXTINGUISHMENT OF A FIRE SPOT**

(30) Priority: 25.04.2025 KR 20250054412
(71) Applicant: Korea Institute of Robot & Convergence, Gyeongsangbuk-do 37666 (KR)
(72) Inventor: Yu, Byeong Gi, 37717 Pohang-si, Gyeongsangbuk-do (KR); Kim, Mu Rim, 37669 Pohang-si, Gyeongsangbuk-do (KR); Lee, Jun Young, 41870 Daegu (KR); Park, Sang Hyun, 37836 Pohang-si, Gyeongsangbuk-do (KR); Kim, Jin Won, 37666 Pohang-si, Gyeongsangbuk-do (KR)
(74) Representative: Petraz, Gilberto Luigi

(57) **Abstract**

Proposed are an apparatus and a method for generating a trajectory of water discharged from a water gun toward a fire spot. The apparatus includes an obtaining unit (110) for obtaining water discharging information including characteristic information of a water gun (10), a position of a fire spot (fp), and a discharge amount, and a generating unit (150) for generating a trajectory of water discharged from the water gun (10) to form a water stream (ws) for suppressing a fire at the fire spot (fp) by using the water discharging information. The generating method includes obtaining water discharging information, calculating a pan-tilt angle (sol1, sol2) of the water gun (10) that allows a water stream (ws) to pass through the position of the fire spot, and generating a pan-tilt trajectory of the water gun (10) that forms the water stream (ws) for suppressing a fire at the fire spot (fp) by using the water discharging information and the pan-tilt angle.

## Description

### TECHNICAL FIELD

The present disclosure relates to an apparatus and a method for generating a trajectory of water discharged from a water gun toward a fire spot.

### BACKGROUND

In real-world fields with complex environmental conditions, it is virtually impossible to calculate a pan-tilt angle to drop water on a fire spot by solving complex fluid dynamics equations. Accordingly, a method of correcting the tilt angle by using a heuristic approach after calculating a simple projectile path is used in the field.

Alternatively, a method has also been proposed in which an additional camera is installed outside a firefighting water system to capture the jet stream being discharged, analyze the same, and predict the drop position, thereby correcting the pan-tilt angle toward the target fire spot.

In practice, the method of correcting a tilt value through repeated trial and error or providing feedback by mounting more cameras on the outside is not an effective method in a complex fire site. According to research, it is impractical to precisely discharge water, targeted at the fire spot identified by the sensor system, so it is considered that continuously discharging water over a wider area is more effective in suppressing a fire. In addition, automatic water canon (AWC) systems are known to frequently employ techniques to widen the water coverage area and mitigate the target accuracy of the fire spot by using narrow angle sweeping. In addition, by introducing the sweeping pattern of the AWC, it is shown that sufficient water flux can be delivered to the fire spot despite various inaccuracies and uncertainties. Consequently, as long as sensors or algorithms capable of continuously recognizing and providing feedback on fire spots in dense smoke and unstructured environments are not developed, the water discharge for fire suppression is likely to use a feedforward method.

### SUMMARY

The present disclosure is to provide an apparatus and a method for generating a trajectory of water discharged from a water gun that discharges fire-extinguishing water toward a fire spot so that fire suppression is possible.

A generator according to an exemplary embodiment of the present disclosure is provided.

The generator may include an obtaining unit for obtaining water discharging information including characteristic information of a water gun, a position of a fire spot, and a discharge amount, and a generating unit for generating a trajectory of water discharged from the water gun to form a water stream for suppressing a fire at the fire spot by using the water discharging information.

A calculating unit may be provided to calculate a pan-tilt angle of the water gun that allows the water stream to pass through the position of the fire spot.

The calculating unit may output a first pan-tilt angle and a second pan-tilt angle, each passing through the position of the fire spot.

A water stream passing through the position of the fire spot by the first pan-tilt angle may be defined as a first stream, and a water stream passing through the position of the fire spot by the second pan-tilt angle may be defined as a second stream.

An angle at which the first stream enters the position of the fire spot on the basis of a flame direction formed at the position of the fire spot may be defined as a first entry angle, and an angle at which the second stream enters the position of the fire spot on the basis of a surface on which the position of the fire spot exists may be defined as a second entry angle.

The generating unit may generate the trajectory of water discharged from the water gun by using the first pan-tilt angle when the first entry angle is smaller than the second entry angle.

The generating unit may generate the trajectory of water discharged from the water gun by using the second pan-tilt angle when the second entry angle is smaller than the first entry angle.

A calculating unit may be provided to calculate a pan-tilt angle of the water gun that allows the water stream to pass through the position of the fire spot.

The calculating unit may output a first pan-tilt angle and a second pan-tilt angle, each passing through the position of the fire spot.

A water stream passing through the position of the fire spot by the first pan-tilt angle may be defined as a first stream, and a water stream passing through the position of the fire spot by the second pan-tilt angle may be defined as a second stream.

A normal vector perpendicular to a flame direction corresponding to a direction of a flame formed at the position of the fire spot may be defined.

An angle at which the first stream enters the position of the fire spot on the basis of the normal vector may be defined as a first angle.

When an angle at which the second stream enters the position of the fire spot on the basis of the normal vector is defined as a second angle, the generating unit may generate the trajectory of water discharged from the water gun by using an angle (one of the first angle and the second angle) that is closer to a vertical with respect to the normal vector among the first angle and the second angle.

The generating unit may set a water discharging area centered on the position of the fire spot.

A first position spaced apart from the position of the fire spot may be defined within a range of the water discharging area.

A calculating unit may be provided to calculate a pan-tilt angle of the water gun that allows the water stream to pass through the position of the fire spot and the first position.

The generating unit may set a stream line connecting the position of the fire spot and the first position on the water discharging area.

The generating unit may generate the trajectory of water discharged from the water gun such that the water stream can move along the stream line.

The generating unit may generate the trajectory of water discharged from the water gun such that the water discharging amount at the position of the fire spot is greater than the water discharging amount at the first position.

The generating unit may set a water distribution centered on the position of the fire spot by using a bivariate normal distribution.

The generating unit may generate the trajectory of water discharged from the water gun such that water is discharged in accordance with the water distribution.

The generating unit may set the stream line by using a spiral scan having the position of the fire spot as a starting point.

The generating unit may set an interval of the stream line in accordance with a diameter of the water stream.

An amount of water required for each point in the water discharging area may be defined as the water distribution in order to suppress the fire at the position of the fire spot.

The generating unit may set the spiral scan to have a radius sufficient to cover more than or equal to a set area ratio of the water discharging area formed by the water distribution.

The generating unit may three-dimensionally form the water distribution which matches the water discharging area centered on the position of the fire spot.

The generating unit may form a spiral path of the spiral scan on the water distribution.

The generating unit may set the water discharging amount of the water gun in accordance with a height of the water distribution at each point of the spiral path.

The generating unit may set a plurality of points along the spiral path.

The calculating unit may calculate a point angle corresponding to the pan-tilt angle of the water gun matching each point and a stopping time.

The generating unit may generate a pan-tilt trajectory of the water gun for discharging water in accordance with the water distribution by using the point angle and the stopping time.

The generating unit may isolate the water stream at a pitch interval of the spiral path on the spiral path.

The generating unit may determine a discharging position of the water stream by using a point of the pitch interval rather than a line.

The generating unit may forcibly isolate the water stream at the pitch interval of the spiral path even in an environment where discharging water from the water gun is performed continuously rather than discretely.

The generator may be a computer system that communicates with a display generation component, and may include at least one processor and a memory storing at least one program.

The at least one program may be configured to be executed by the at least one processor, and may include an instruction for obtaining water discharging information including characteristic information of a water gun, a position of a fire spot, and a water discharging amount, and an instruction for generating a trajectory of water discharged from the water gun that forms a water stream for suppressing a fire at the fire spot by using the water discharging information.

A generating method according to another exemplary embodiment of the present disclosure may be provided.

The generating method may include obtaining water discharging information including characteristic information of a water gun, a position of a fire point, and a water discharging amount, calculating a pan-tilt angle of the water gun that allows a water stream to pass through the position of the fire spot, and generating a pan-tilt trajectory of the water gun that forms the water stream for suppressing a fire at the fire spot by using the water discharging information and the pan-tilt angle.

The calculating step may output a first pan-tilt angle and a second pan-tilt angle, each passing through the position of the fire spot.

A water stream passing through the position of the fire spot by the first pan-tilt angle may be defined as a first stream, and a water stream passing through the position of the fire spot by the second pan-tilt angle may be defined as a second stream.

A normal vector perpendicular to a flame direction corresponding to a direction of a flame formed at the position of the fire spot may be defined.

An angle at which the first stream enters the position of the fire spot on the basis of the normal vector may be defined as a first angle.

When an angle at which the second stream enters the position of the fire spot on the basis of the normal vector is defined as a second angle, the generating step may generate the trajectory of water discharged from the water gun by using an angle that is closer to a vertical with respect to the normal vector among the first angle and the second angle.

According to a generator of the present disclosure, a trajectory for discharging water may be generated to mitigate inaccuracies and uncertainties associated with fire suppression.

According to a generator of the present disclosure, an environment may be provided in which a pan-tilt angle of a water gun required to suppress a fire is automatically controlled.

### BRIEF DESCRIPTION OF THE DRAWINGS

FIG. 1 is a schematic diagram illustrating a generator according to an exemplary embodiment of the present disclosure.
FIG. 2 is a schematic diagram illustrating an operation of a generator according to an exemplary embodiment of the present disclosure.
FIG. 3 is a schematic diagram illustrating an operation of a calculating unit included in a generator according to an exemplary embodiment of the present disclosure.
FIG. 4 is a schematic diagram for proving a validity of a pan-tilt angle calculated in a generator according to an exemplary embodiment of the present disclosure.
FIG. 5 is a schematic diagram illustrating a process of selecting one of a plurality of pan-tilt angles in a generator according to an exemplary embodiment of the present disclosure.
FIG. 6 is a schematic view illustrating a water distribution used in a generator according to an exemplary embodiment of the present disclosure.
FIG. 7 is a schematic view illustrating a state in which a water distribution is set by using a bivariate normal distribution according to an exemplary embodiment of the present disclosure.
FIG. 8 is a schematic view illustrating a planar view of a spiral scan of a generator according to an exemplary embodiment of the present disclosure.
FIG. 9 is a schematic view illustrating a method of performing a spiral scan on a water distribution generated by a generator according to an exemplary embodiment of the present disclosure.
FIG. 10 is a schematic view illustrating a first line and a second line formed by a generator according to an exemplary embodiment of the present disclosure.
FIG. 11 is a schematic view illustrating a state of a water distribution in which the height of the water decreases as moving farther away from a position of a fire spot.
FIG. 12 is a schematic view illustrating a point formed on a spiral path by a generator according to an exemplary embodiment of the present disclosure.
FIG. 13 is a schematic view illustrating a point formed on a water distribution by a generator according to an exemplary embodiment of the present disclosure.
FIG. 14 is a schematic view illustrating a water column of a height calculated for each point set by a generator according to an exemplary embodiment of the present disclosure.
FIG. 15 is a schematic view illustrating a trajectory of water discharged from a water gun in which a stopping time is reflected by a generator according to an exemplary embodiment of the present disclosure.
FIG. 16 is a schematic view illustrating a trajectory of water discharged from a water gun generated by a generator according to an exemplary embodiment of the present disclosure.
FIG. 17 is a flowchart illustrating a generating method according to another exemplary embodiment of the present disclosure.
FIG. 18 is a view illustrating a computing device according to an exemplary embodiment of the present disclosure.

### DETAILED DESCRIPTION

Hereinafter, an exemplary embodiment of the present disclosure will be described in detail with reference to the accompanying drawings so that those skilled in the art may easily implement the present disclosure. However, the present disclosure may be implemented in a number of different forms and is not limited to the exemplary embodiments described herein. In addition, in order to clearly explain the present disclosure in the drawings, parts irrelevant to the description are omitted, and similar reference numerals are used for similar components throughout the specification.

In the present specification, redundant descriptions of identical components will be omitted.

In addition, when a component is referred to as being "connected" or "coupled" to another component in the present specification, it should be understood that the component may be directly connected or coupled to the other component, but that another component may exist in the middle. On the other hand, when a component is referred to as being "directly connected" or "directly coupled" to another component, it should be understood that no other component exists in the middle.

In addition, the terms used in the present specification are intended to describe particular exemplary embodiments only and are not intended to limit the present disclosure.

In addition, the singular expression used in the present specification may be intended to include the plural expressions as well, unless the context clearly indicates otherwise.

In addition, it should be understood that the terms such as "include" or "have" used in the present specification are intended to specify the presence of a feature, number, step, operation, component, part, or combination thereof described in the specification, but are not intended to preclude the presence or addition of one or more other features, numbers, steps, operations, components, parts, or combinations thereof.

In addition, the term "and/or" in the present specification may include any combination of the plurality of described items or any one of the plurality of described items. In the present specification, the term "and/or" may include "A", "B", or "both A and B".

In addition, detailed descriptions of well-known functions and configurations that may obscure the gist of the present disclosure will be omitted in the present specification.

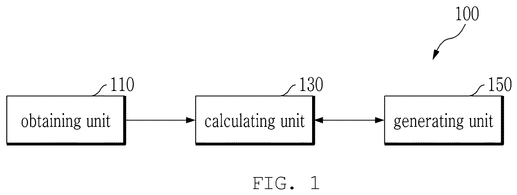

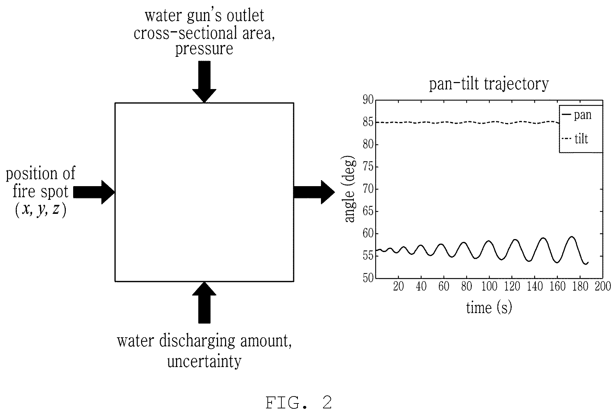

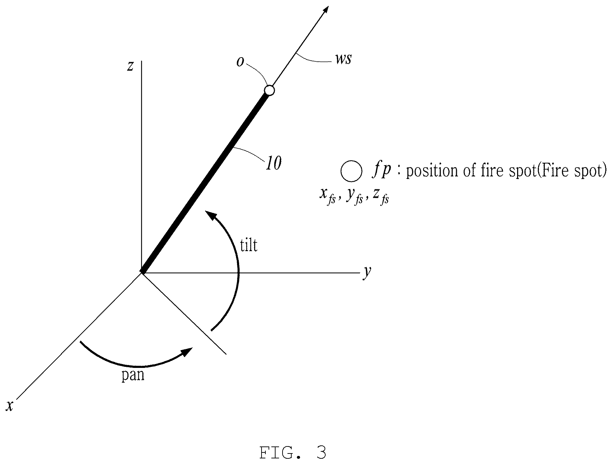

FIG. 1 is a schematic diagram illustrating a generator 100 according to an exemplary embodiment of the present disclosure. FIG. 2 is a schematic diagram illustrating an operation of a generator 100 according to an exemplary embodiment of the present disclosure. FIG. 3 is a schematic diagram illustrating an operation of a calculating unit 130 included in a generator 100 according to an exemplary embodiment of the present disclosure.

The generator 100 shown in FIG. 1 may include an obtaining unit 110, a calculating unit 130, and a generating unit 150.

The obtaining unit 110 may obtain water discharging information (i.e., information about water ejection or release) including characteristic information of a water gun 10, a position of a fire spot, and a water discharging amount.

The water gun 10 may include a nozzle formed at a terminal end of a flow path through which water flows and through which water is discharged to the outside.

The characteristic information of the water gun 10 may include at least one of an outlet cross-sectional area of the water gun 10 and a pressure of the water gun 10.

Meanwhile, an uncertainty of the position of the fire spot may be added to the water discharging information in consideration of a characteristic that the position of the fire spot moves or changes during a fire, a characteristic that it is difficult to accurately specify the position of the fire spot due to flames, and the like. As an example, the uncertainty may be obtained in the form of dispersion of the position of the fire spot.

The calculating unit 130 may calculate a pan-tilt angle of the water gun 10 that allows the water stream ***ws*** to pass through the position of the fire spot.

When the position of the fire spot in a specific fire scene is fixed and only one, fire suppression may be possible by using only a single pan-tilt angle calculated by the calculating unit 130. However, there is a plurality of positions of the fire spots at the fire scene and the corresponding positions change from moment to moment, such that it is necessary to appropriately change the pan-tilt angle of the water gun 10.

In this way, changes in the pan-tilt angle of the water gun 10 that appropriately change or vary over time may be included in the trajectory of the water gun 10 or the pan-tilt trajectory of the water gun 10 described in the present specification.

When the water gun 10 forming a water stream for suppressing a fire at the fire spot ***fp*** is provided, the generating unit 150 may generate the trajectory of water discharged from the water gun 10 necessary for suppressing the fire by using at least one of the pan-tilt angle calculated by the calculating unit 130 and the water discharging information.

In summary, when the water discharging information is obtained as shown in FIG. 2, the generator 100 may output a pan-tilt trajectory. The pan-tilt trajectory may be output as numerical data or as graphical data as shown in FIG. 2.

The generator 100 may provide a procedure and a strategy for generating a pan-tilt (angle) trajectory for discharging water toward the fire spot ***fp*.**

In order to generate the pan-tilt angle, the water discharging information may be provided to the obtaining unit 110 by a user or a sensor. The obtaining unit 110 may be provided with an input means, such as a keyboard, through which a user inputs the water discharging information, or may be provided with a communication module configured to communicate, either wirelessly or via a wired connection with a sensor that detects the water discharge information, for example, a thermal imaging camera that identifies the position of the fire spot. The obtaining unit 110 may obtain the water discharging information through the input means or the communication module. In some cases, the obtaining unit 110 may include a sensor itself that detects the water discharging information.

The calculating unit 130 may calculate the pan-tilt angle of the water gun 10 capable of discharging water toward the position of the fire spot when the position of the fire spot is obtained.

As an example, the calculating unit 130 may predict the pan-tilt trajectory under the assumption that drag force is neglected. Due to the omission of the drag force by air resistance, wind, and the like, the possibility may be reduced that the actual water stream falls to the position of the fire spot. However, this may not be a significant issue due to the uncertainty the position of the fire spot has. This is because the generator 100 may generate the trajectory for discharging water that targets an entire area centered on the position of the fire spot.

Again, the calculating unit 130 may calculate an initial velocity norm of the water stream based on Bernoulli's equation.

At this time, as shown in FIG. 3, an origin ***o*** of the water stream may be set to an end effector of the water gun 10, from which the water is discharged (ejected or released), such as a terminal end of a nozzle through which water is output to the outside.

The following Equation 1 represents a trajectory of water over time. $\begin{matrix}x = {v}_{xi} t \\ y = {v}_{yi} t \\ z = {v}_{zi} t - 0.5 {gt}^{2}\end{matrix}$ (Equation 1)

Herein, ***vₓᵢ**, **v_{yi}**,* and ***v_{zi}*** are magnitude values of the discharging water in the direction of the xyz coordinate system, and g is a gravitational acceleration constant. ***t*** is a time. ***x, y***, and ***z*** are spatial positions of the water stream. $\begin{matrix}{v}_{xi} = \frac{{x}_{fs}}{{t}_{eta}} \\ {v}_{yi} = \frac{{y}_{fs}}{{t}_{eta}} \\ {v}_{zi} = \frac{{z}_{fs}}{{t}_{eta}} + \frac{g}{2} {t}_{eta}\end{matrix}$ (Equation 2) $\sqrt{{v}_{xi}^{2} + {v}_{yi}^{2} + {v}_{zi}^{2}} = {v}_{initial} = \sqrt{\frac{2 P}{ρ}}$ (Equation 3)

Equation 2 is a projectile equation.

Equation 3 is Bernoulli's equation.

Equation 2 and Equation 3 may correspond to equations for calculating the initial velocity value required to reach the fire spot.

Herein, *x_{fs}, **y_{fs}**,* and ***z_{fs}*** are the positions of fire spots, and ***tₑₜₐ*** is the time for water to reach the fire spot fp.

P is the pressure of the water inside the water gun 10, and A is the cross-sectional area at the terminal end of the water gun 10.

Since there are four unknowns, ***Tₑₜₐ*, *vₓᵢ=vₓ, v_{yi}*=*v_{y}, v_{zi}*=*****v_{z}**,* and four equations, the value of the unknowns can be derived as in Equation 4. $\begin{matrix}{t}_{eta} \\ = \sqrt{\frac{\left({v}_{initial}^{2}-{gz}_{fs}\right) \pm \sqrt{{\left({gz}_{fs}-{v}_{initial}^{2}\right)}^{2} - {g}^{2} \left({x}_{fs}^{2}+{y}_{fs}^{2}+{z}_{fs}^{2}\right)}}{{g}^{2} / 2}} \\ {v}_{x} = \frac{{x}_{fs}}{{t}_{eta}} {v}_{y} = \frac{{y}_{fs}}{{t}_{eta}} {v}_{z} = \frac{{z}_{fs}}{{t}_{eta}} + \frac{g}{2} {t}_{eta}\end{matrix}$ (Equation 4)

A condition for preventing time from becoming a negative number or a complex number in Equation 4 is shown in Equation 5. $\begin{matrix}{v}_{initial} > \sqrt{{gz}_{fs} + g \sqrt{{x}_{fs}^{2} + {y}_{fs}^{2} + {z}_{fs}^{2}}} \\ P > \frac{{gz}_{fs} + g \sqrt{{x}_{fs}^{2} + {y}_{fs}^{2} + {z}_{fs}^{2}}}{2 {A}^{2}} ρ\end{matrix}$ (Equation 5)

Equation 5 represents the initial velocity value or initial pressure of the water required for the water to reach the position of the fire spot.

Finally, the pan-tilt angle of the water gun 10 for dropping water at the position of the fire spot is shown in Equation 6. The pan-tilt angle may include a pan angle having a virtual axis extending in the direction of gravity as a rotation center, and a tilt angle having a virtual axis perpendicular to the direction of gravity as a rotation center. $\begin{matrix}Pan angle = atan \left(\frac{{v}_{yi}}{{v}_{xi}}\right) \\ Tilt angle = atan \left(\frac{{v}_{zi}}{\sqrt{{v}_{xi}^{2} + {v}_{yi}^{2}}}\right)\end{matrix}$ (Equation 6)

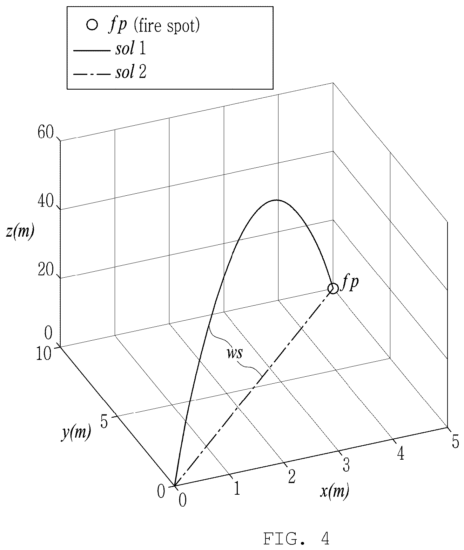

FIG. 4 is a schematic diagram for proving a validity of a pan-tilt angle calculated in a generator 100 according to an exemplary embodiment of the present disclosure.

In FIG. 4, the position of the fire spot is [5, 10, 0] (in units of meters).

***A*** (a cross-sectional area at the terminal end of the water gun 10) is 0.01 (in units of square meters).

***P*** (the pressure of water inside the water gun 10) is 500000 (in units of pascal).

The density of water is 1000 kg/m³.

***g*** (the gravitational acceleration constant) is 9.81 m/s².

As can be seen, there is not one solution including four unknown values derived from the equation. In the exemplary embodiment of FIG. 4, two solutions, ***sol1*** and ***sol2,*** are derived.

The pan-tilt trajectory of the water gun 10 may be applied to control the operation of the water gun 10. In order to provide a single control command, one solution should be selected from a plurality of solutions.

As an example, a first pan-tilt angle ***sol1*** and a second pan-tilt angle ***sol2,*** each passing through the position of the fire spot may be output from the calculating unit 130.

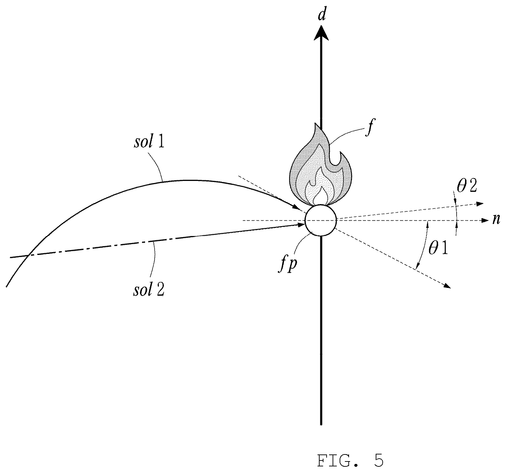

FIG. 5 is a schematic diagram illustrating a process of selecting *o*ne of a plurality of pan-tilt angles in a generator 100 according to an exemplary embodiment of the present disclosure.

A water stream passing through the position of the fire spot by the first pan-tilt angle ***sol1*** may be defined as a first stream. A water stream passing through the position of the fire spot by the second pan-tilt angle ***sol2*** may be defined as a second stream.

An angle at which the first stream enters the position of the fire spot on the basis of a direction ***d*** (i.e., a direction in which the flame rises) of a flame ***f*** formed at the position of the fire spot may be defined as a first entry angle. An angle at which the second stream enters the position of the fire spot on the basis of the surface on which the position of the fire spot exists can be defined as a second entry angle.

When the first entry angle is smaller than the second entry angle, the generating unit 150 may generate the trajectory of water discharged from the water gun 10 by using the first pan-tilt angle.

When the second entry angle is smaller than the first entry angle, the generating unit 150 may generate the trajectory of water discharged from the water gun 10 by using the second pan-tilt angle.

This is because the effectiveness of fire suppression is greater as penetrating the flame as long as possible. In other words, the effectiveness of fire suppression may be greater as the water stream ***ws*** is formed closer to the flame direction ***d.***

Mathematically, it may be difficult to introduce the first entry angle and the second entry angle. To address this, a normal vector ***n*** perpendicular to the flame direction may be defined, and the first entry angle and the second entry angle may be redefined by using the normal vector ***n*.**

As an example, the first entry angle may be redefined as a first angle ***θ*1** based on the normal vector ***n*.**

The second entry angle may be redefined as a second angle ***θ*2** based on the normal vector ***n*.**

In this case, an angle having a larger angle (i.e., closer to perpendicular) with respect to the normal vector ***n*** may be selected from the first angle ***θ*1** and the second angle ***θ*2.**

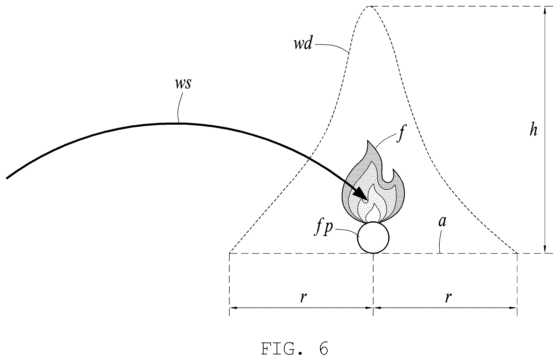

Accordingly, in FIG. 6, the solution ***sol1*** having the first angle ***θ*1** may be generated as the trajectory of water discharged from the water gun 10.

Meanwhile, it is difficult to accurately determine what situation the fire spot ***fp*** is in the field, so the flame direction ***d*** may be determined on the basis of on-site determination.

The pan-tilt angle may be calculated by the calculating unit 130 on the basis of the fire spot ***fp*** and conditions given according to the above procedure, on the basis of which the trajectory of water discharged from the water gun 10 may be generated by the generating unit 150. However, when the water gun 10 is controlled by using the pan-tilt angle calculated by the calculating unit 130, it is practically impossible to suppress a fire.

This is because there is an uncertainty of the fire spot, such as the difficulty in accurately specifying the position of the fire spot due to flames, and the change in the position of the fire spot.

In addition, the fact that the numerical values such as water pressure fluctuate uncertainly in the field may be the cause. In addition, the fact that the pan-tilt angle (drag force is neglected) calculated by using a very simple equation is likely to be inaccurate may also be the cause. In addition, the fact that unpredictable external forces such as wind exist in the field can also be the cause.

FIG. 6 is a schematic view illustrating a water distribution used in a generator 100 according to an exemplary embodiment of the present disclosure.

The generating unit 150 may set a water discharging area ***a*** centered on the position of the fire spot ***fp*.**

When a first position spaced apart from the position of the fire spot within the range of the water discharging area is defined, the calculating unit 130 may calculate the pan-tilt angle of the water gun 10 that allows the water stream ***ws*** to pass through the position of the fire spot and the first position.

The generating unit 150 may set a stream line ***sl*** connecting the position of the fire spot and the first position on the water discharging area ***a*.**

The generating unit 150 may generate the trajectory of water discharged from the water gun 10 so that the water stream ***ws*** can move along the stream line ***sl.***

The generating unit 150 may generate the trajectory of water discharged from the water gun 10 so that the water discharging amount at the position of the fire spot is greater than the water discharging amount at the first location.

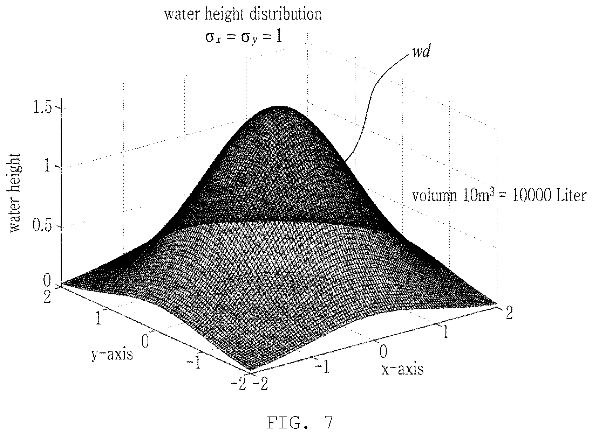

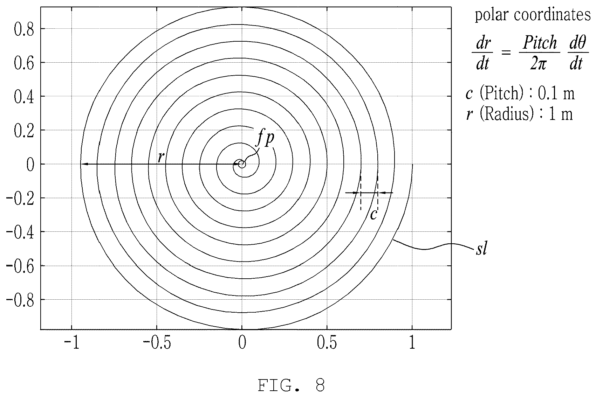

FIG. 7 is a schematic view illustrating a state in which a water distribution is set by using a bivariate normal distribution according to an exemplary embodiment of the present disclosure. FIG. 8 is a schematic view illustrating a planar view of a spiral scan of a generator 100 according to an exemplary embodiment of the present disclosure.

As an example, the generating unit 150 may set a water distribution ***wd*** centered on the position of the fire spot by using a bivariate normal distribution.

The generating unit 150 may generate the trajectory of water discharged from the water gun 10 so that water can be discharged in accordance with the water distribution ***wd*** based on the bivariate normal distribution.

The bivariate normal distribution may have properties that make it convenient to use. First, the volume is 1. That is, as long as the height of the bivariate normal distribution is scaled, the shape may be easily changed. Second, it is possible to generate various distributions by changing the correlation between two variables.

The generating unit 150 may set the fire spot by using the average value. When the ***z*** value is not 0, or when the ground is not a water volume distribution project surface (the bottom surface of the water discharging area ***a*),** repositioning of the fire spot may be performed through a transformation.

When the variance of a random variable and the correlation of the variable are experimentally set or set by the user in the bivariate normal distribution, the generating unit 150 may generate a bivariate normal distribution centered on the position of the fire spot. For reference, the correlation may be assumed to be 0 in the experimental process of the present disclosure.

Meanwhile, a problem may arise as to how water should be discharged in order to satisfy the water distribution generated by the generating unit 150. In order to effectively suppress a fire, it may be desirable to spray a larger amount of water as closer to the position of the fire spot, and to spray a smaller amount of water as moving farther away from the position of the fire spot.

In order to solve the problem related to how to spray water, a spiral scan can be introduced.

The generating unit 150 may set the stream line ***sl*** by using the spiral scan having the position of the fire spot as a starting point.

The generating unit 150 may set an interval (a pitch ***c*)** of the stream line ***sl*** in accordance with the diameter of the water stream ***ws.***

The amount of water required for each point of the water discharging area ***a*** in order to suppress a fire at the position of the fire spot may be defined as a water distribution.

The generation unit 150 may set the spiral scan having a radius ***r*** sufficient to cover more than or equal to a set area ratio of the water discharging area ***a*** formed by the water distribution ***wd***. The shape of the water discharging area ***a*** may be different from that of the spiral scan, in which case the spiral scan cannot completely fill the water discharging area ***a*.** According to an exemplary embodiment, the spiral scan may be set to cover a set ratio of the water discharging area ***a*,** for example, 90% or more.

Equations and characteristics used for the spiral scan may be as shown in FIG. 8.

The pitch ***c*** may be set to a diameter of the water stream *ws.* Accordingly, water may be sprayed without gaps, at least in an area covered by the spiral scan in the water discharging area ***a*.**

Meanwhile, the variable range or dynamic range of the bivariate normal distribution is infinite, but it is impossible to select the water discharging area of infinite size in reality. Accordingly, a realistic spiral scan or a radius of the water discharging area may be set. The corresponding radius ***r*** may be set by a user or automatically set by a detecting means for detecting a fire in the field.

For example, a radius ***r*** is set to 1m in FIG. 8. The characteristics of the spiral corresponding to the stream line ***sl*** of the spiral scan may be set to a set pitch ***c*** and a set radius ***r*.**

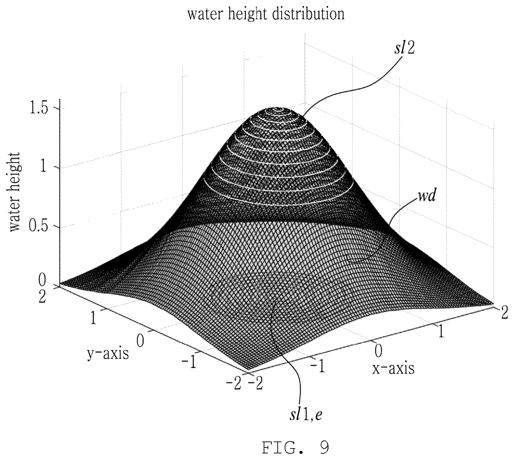

The height of the water extracted by the spiral scan on the water distribution formed by the bivariate normal distribution is shown in FIG. 9.

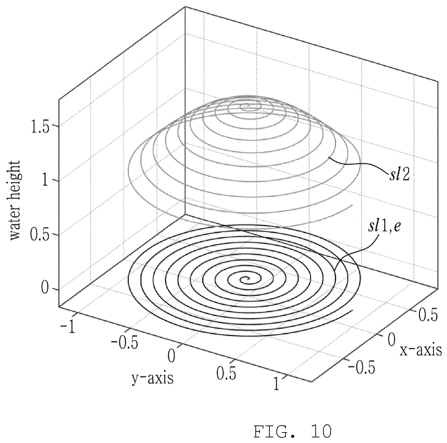

FIG. 9 is a schematic view illustrating a method of performing a spiral scan on a water distribution generated by a generator 100 according to an exemplary embodiment of the present disclosure. FIG. 10 is a schematic view illustrating a first line and a second line formed by a generator 100 according to an exemplary embodiment of the present disclosure.

The stream line ***sl*** of the spiral scan may include a first line ***sl1*** formed on the bottom surface of the water distribution or on the water discharging area. In this case, the first line ***sl1*** may be matched with the spiral path ***e*.** Alternatively, the stream line ***sl*** of the spiral scan may include a second line ***sl2*** in which the first line ***sl1*** is projected on a three-dimensional curved surface representing the water distribution.

The second line ***sl2*** may be that water height information is added to the first line ***sl1**.* The water height ***h*** may be related to the amount of water to be dropped at each point. This is because the volume or the water discharging amount can be calculated by multiplying the water height at a specific point by the cross-sectional area of the water stream.

In summary, the generating unit 150 may three-dimensionally form the water distribution ***wd*** matching the water discharging area ***a*** centered on the position of the fire spot. The generating unit 150 may form a spiral path (corresponding to the second line ***sl2**)* of the spiral scan on a three-dimensional surface representing the water distribution. The generating unit 150 may set the water discharging amount of the water gun 10 in accordance with the height of the water distribution for each point of the spiral path.

When water is sprayed as much as the height of the second line ***sl2*** shown in FIG. 9 or FIG. 10, the water discharging that follows the initially set bivariate normal distribution may be performed targeting the water discharging area ***a*.**

However, there may be problems with implementation in reality. Usually, the flow rate or the flow velocity may be constant because constant pressure is used in the field. In such a case, it is not possible to generate the desired water height while moving continuous water streams along the spiral path.

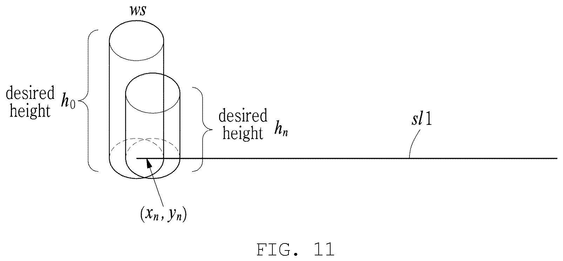

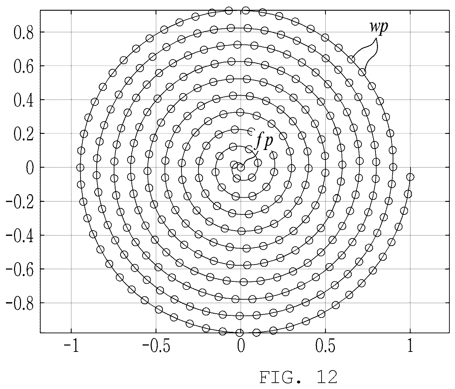

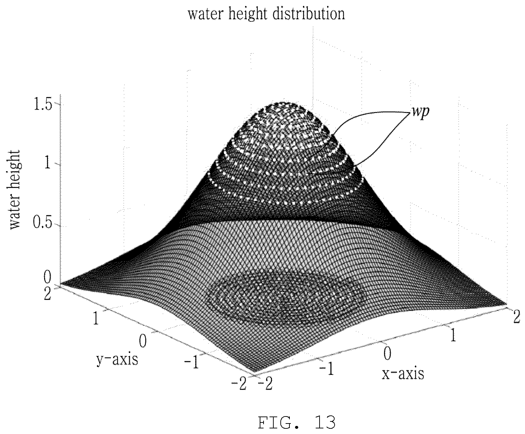

FIG. 11 is a schematic view illustrating a state of a water distribution in which the height of the water decreases as moving farther away from a position of a fire spot. FIG. 12 is a schematic view illustrating a point formed on a spiral path by a generator 100 according to an exemplary embodiment of the present disclosure. FIG. 13 is a schematic view illustrating a point formed on a water distribution by a generator 100 according to an exemplary embodiment of the present disclosure.

The time (which corresponds to the time that the water gun 10 should maintain a specific pan-tilt angle) that the water stream ***ws*** should remain in order to satisfy the water height at any point on the spiral path ***e*** may be calculated by ***t_{duration}* = *h*_{*n*/}*V_{water_initial}* (*hₙ*** is the water height at any point and ***v*_{*water*_*initial*}** is the initial water speed) .

However, water is continuously sprayed from the water gun 10, so the points entering the cross-sectional area of the water stream cannot independently ensure a water height. As a result, the water height at any point may correspond to the addition of the height of the water accumulated when included in the cross-sectional area of the water stream, and in this case, the height of the water stream may become a monotonic increase function that can never decrease. According to the spiral scan, it is necessary to generate a pan-tilt trajectory in which the water height gradually decreases as moving farther away from the position of the fire spot. However, due to the characteristics of the water stream, which has a tendency of a monotonic increase function, a problem may arise in that it is impossible to generate the pan-tilt trajectory in which the water height gradually decreases as moving farther away from the position of the fire spot.

In other words, a specific position within the radius of the water stream in a water discharging environment with a constant flow rate may be affected by the water stream accumulated in the previous step, resulting in a problem in that the water height at a specific position within the diameter or radius of the water stream cannot decreases.

For example, it is assumed that the radius of the water stream is 2 cm. When discharging water in accordance with a height of 10 meters at a current position and moving to the next second position spaced 1 cm apart, the second position may have already received water of 10-meter height in the previous step. Accordingly, when water at a height corresponding to the second position is discharged toward the second position, the height of the additionally discharged water may be added to the previously accumulated water of 10 meters. Accordingly, it is not possible to satisfy the water distribution in which the water height gradually decreases as moving farther away from the position of the fire spot.

In order to solve such a problem, the generating unit 150 may isolate the water stream on the spiral path ***e*.** As an example, the generating unit 150 may isolate the water stream at a pitch interval on the spiral path ***e.***

From another perspective, the generating unit 150 may set a plurality of points ***wp*** along the spiral path.

The calculating unit 130 may calculate a point angle corresponding to the pan-tilt angle of the water gun 10 matching each point ***wp*,** and a stopping time.

The generating unit 150 may generate the pan-tilt trajectory of the water gun 10 for discharging water in accordance with the water distribution ***wd*** by using the point angle and the stopping time.

The generating unit 150 may isolate the water stream at the pitch interval of the spiral path on the spiral path.

The generating unit 150 may determine the discharging position of the water stream by a point of a pitch interval rather than a line. It is obvious that complete isolation cannot be achieved in practice, since discharging water from the water gun 10 is not discrete and is performed continuously. However, it has been confirmed that a trajectory of water discharged from the water gun 10 can be generated through actual control of the water gun 10 by applying the above theory so as to satisfy a water height following the water distribution.

After generating the spiral line, the generating unit 150 may set a point for each diameter distance of the water stream.

As an example, the linear search method used to find each point is shown in Equation 7. $\begin{matrix}Arch length formula \\ \frac{b}{2} \left[θ\sqrt{1 + {θ}^{2}}+ln\left(θ+\sqrt{1 + {θ}^{2}}\right)\right] \\ Utilized linear search \\ count = 1 \\ For i = 1 : size \left(theta\right) \\ length = \frac{b}{2} \left[θ\sqrt{1 + {θ}^{2}}+ln\left(θ+\sqrt{1 + {θ}^{2}}\right)\right] \\ if abs \left(length-pitch*count\right) < ϵ \\ resample \left(count\right) = 1 \\ count + + \\ end \\ end\end{matrix}$ (Equation 7)

The generating unit 150 may determine the target position for discharging water as points spaced apart from each other rather than continuous lines by using Equation 7 or the like.

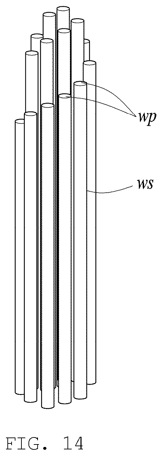

FIG. 14 is a schematic view illustrating a water column of a height calculated for each point set by a generator 100 according to an exemplary embodiment of the present disclosure.

It can be seen that the water stream in accordance with the height of the water distribution for each point is approximately calculated.

The calculating unit 130 may calculate a pan-tilt angle at each point and a stopping time ***t_{duration}*** at that position. The generating unit 150 may generate the pan-tilt trajectory for discharging water targeting the water distribution by using the corresponding pan-tilt angle and the stopping time.

The pan-tilt trajectory according to the generating unit 150 may include a section (a stopping section) in which the water gun 10 is stopped for each point. A time remaining in each stopping section may correspond to the stopping time above.

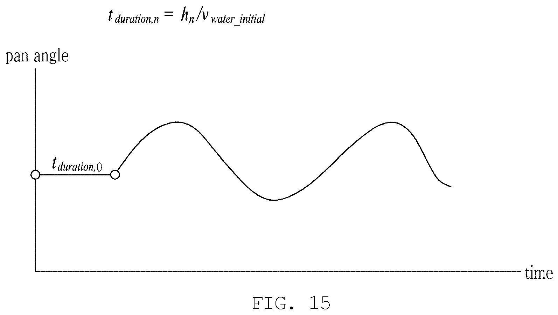

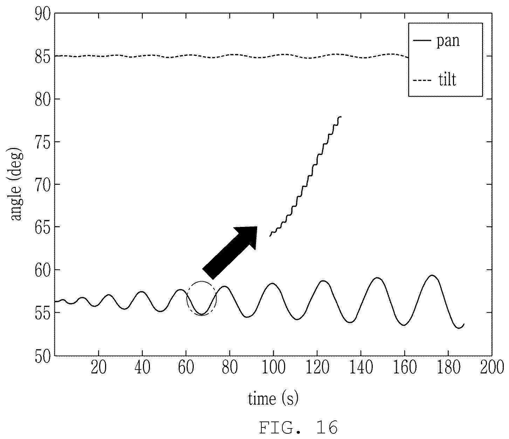

FIG. 15 is a schematic view illustrating a trajectory of water discharged from a water gun 10 in which a stopping time is reflected by a generator 100 according to an exemplary embodiment of the present disclosure. FIG. 16 is a schematic view illustrating a trajectory of water discharged from a water gun 10 generated by a generator 100 according to an exemplary embodiment of the present disclosure.

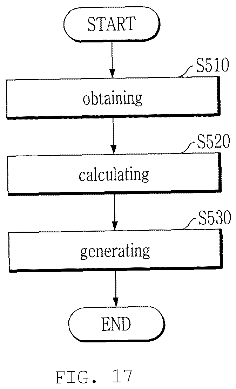

FIG. 17 is a flowchart illustrating a generating method according to another exemplary embodiment of the present disclosure.

The generating method in FIG. 17 may be performed by the generator 100 illustrated in FIG. 1**.**

The generating method may include an obtaining step (S510), a calculating step (S520), and a generating step (S530).

The obtaining step (S510) may obtain the water discharging information including the characteristic information of the water gun 10, the position of the fire spot, and the water discharging amount. The obtaining step (S510) may be performed by the obtaining unit 110.

The calculating step (S520) may calculate the pan-tilt angle of the water gun 10 that allows the water stream to pass through the position of the fire spot. The calculating step (S520) may be performed by the calculating unit 130.

The generating step (S530) may generate the pan-tilt trajectory of the water gun 10 that forms the water stream for suppressing a fire at the fire spot by using the water discharging information and the pan-tilt angle.

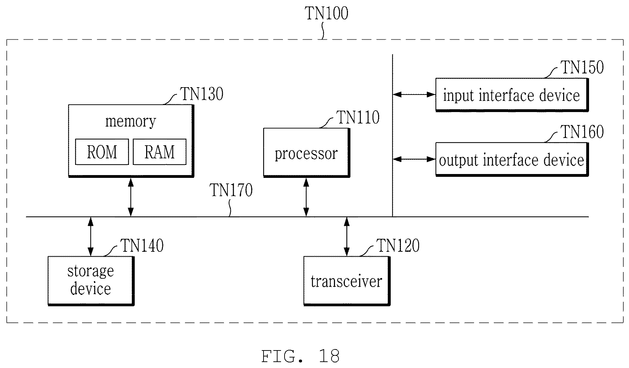

FIG. 18 is a view illustrating a computing device according to an exemplary embodiment of the present disclosure. A computing device (TN100) in FIG. 18 may be an apparatus (e.g., the generator 100 or the like) described in the present specification.

In an exemplary embodiment of FIG. 18, the computing device (TN100) may include at least one processor (TN110), a transceiver (TN120), and a memory (TN130). In addition, the computing device (TN100) may further include a storage device (TN140), an input interface device (TN150), an output interface device (TN160), and the like. The components included in the computing device (TN100) may be connected by a bus (TN170) and may communicate with one another.

The processor (TN110) may execute a program command stored in at least one of the memory (TN130) and the storage device (TN140). The processor (TN110) may refer to a central processing unit (CPU), a graphics processing unit (GPU), or a dedicated processor on which methods according to exemplary embodiments of the present disclosure are performed. The processor (TN110) may be configured to implement the procedures, functions, and methods described in relation to exemplary embodiments of the present disclosure. The processor (TN110) may control each component of the computing device (TN100).

Each of the memory (TN130) and the storage device (TN140) may store a variety of information related to the operations of the processor (TN110). Each of the memory (TN130) and the storage device (TN140) may be configured with at least one of a volatile storage medium and a nonvolatile storage medium. For example, the memory (TN130) may be configured with at least one of a read-only memory (ROM) and a random access memory (RAM).

The transceiver (TN120) may transmit or receive wired or wireless signals. The transceiver (TN120) can be connected to a network and perform communications.

Meanwhile, the exemplary embodiments of the present disclosure is not only implemented through the device and/or method described so far, but also may be implemented through a program that realizes functions corresponding to the configuration of the exemplary embodiment of the present disclosure or a recording medium in which the program is recorded, and such a implementation may be easily implemented by those skilled in the art to which the present disclosure belongs from the description of the exemplary embodiments described above.

Although the exemplary embodiment of the present disclosure has been described in detail above, the scope of the present disclosure is not limited thereto, and various modifications and improvements made by those skilled in the art using the basic concept of the present disclosure defined in the following claims also belong to the scope of the present disclosure.

## Claims

1. A generator, comprising:
an obtaining unit for obtaining water discharging information including characteristic information of a water gun, a position of a fire spot, and a water discharging amount; and
a generating unit for generating a trajectory of water discharged from the water gun that forms a water stream for suppressing a fire at the fire spot by using the water discharging information.

2. The generator of claim 1, wherein a calculating unit is provided to calculate a pan-tilt angle of the water gun that allows the water stream to pass through the position of the fire spot,
the calculating unit outputs a first pan-tilt angle and a second pan-tilt angle, each passing through the position of the fire spot,
a water stream passing through the position of the fire spot by the first pan-tilt angle is defined as a first stream, and a water stream passing through the position of the fire spot by the second pan-tilt angle is defined as a second stream,
when an angle at which the first stream enters the position of the fire spot on the basis of a flame direction formed at the position of the fire spot is defined as a first entry angle, and an angle at which the second stream enters the position of the fire spot on the basis of a surface on which the position of the fire spot exists is defined as a second entry angle,
the generating unit generates the trajectory of water discharged from the water gun by using the first pan-tilt angle when the first entry angle is smaller than the second entry angle, and
the generating unit generates the trajectory of water discharged from the water gun by using the second pan-tilt angle when the second entry angle is smaller than the first entry angle.

3. The generator of claim 1, wherein a calculating unit is provided to calculate a pan-tilt angle of the water gun that allows the water stream to pass through the position of the fire spot,
the calculating unit outputs a first pan-tilt angle and a second pan-tilt angle, each passing through the position of the fire spot,
a water stream passing through the position of the fire spot by the first pan-tilt angle is defined as a first stream, and a water stream passing through the position of the fire spot by the second pan-tilt angle is defined as a second stream,
a normal vector perpendicular to a flame direction corresponding to a direction of a flame formed at the position of the fire spot is defined,
an angle at which the first stream enters the position of the fire spot on the basis of the normal vector is defined as a first angle, and
when an angle at which the second stream enters the position of the fire spot on the basis of the normal vector is defined as a second angle,
the generating unit generates the trajectory of water discharged from the water gun by using an angle that is closer to a vertical with respect to the normal vector among the first angle and the second angle.

4. The generator of claim 3, wherein the generating unit determines the flame direction according to on-site determination information.

5. The generator of claim 1, wherein the generating unit sets a water discharging area centered on the position of the fire spot,
when a first position spaced apart from the position of the fire spot is defined within a range of the water discharging area,
a calculating unit is provided to calculate a pan-tilt angle of the water gun that allows the water stream to pass through the position of the fire spot and the first position,
the generating unit sets a stream line connecting the position of the fire spot and the first position on the water discharging area,
the generating unit generates the trajectory of water discharged from the water gun such that the water stream can move along the stream line, and
the generating unit generates the trajectory of water discharged from the water gun such that the water discharging amount at the position of the fire spot is greater than the water discharging amount at the first position.

6. The generator of claim 5, wherein the generating unit sets a water distribution centered on the position of the fire spot by using a bivariate normal distribution, and
the generating unit generates the trajectory of water discharged from the water gun such that water is discharged in accordance with the water distribution.

7. The generator of claim 5, wherein the generating unit sets the stream line by using a spiral scan having the position of the fire spot as a starting point, and
the generating unit sets an interval of the stream line in accordance with a diameter of the water stream.

8. The generator of claim 7, wherein when an amount of water required for each point in the water discharging area is defined as the water distribution in order to suppress the fire at the position of the fire spot,
the generating unit sets the spiral scan to have a radius sufficient to cover more than or equal to a set area ratio of the water discharging area formed by the water distribution.

9. The generator of claim 7, wherein the generating unit three-dimensionally forms the water distribution which matches the water discharging area centered on the position of the fire spot,
the generating unit forms a spiral path of the spiral scan on the water distribution, and
the generating unit sets the water discharging amount of the water gun in accordance with a height of the water distribution at each point of the spiral path.

10. The generator of claim 9, wherein the generating unit sets a plurality of points along the spiral path,
the calculating unit calculates a point angle corresponding to the pan-tilt angle of the water gun matching each point and a stopping time,
the generating unit generates a pan-tilt trajectory of the water gun for discharging water in accordance with the water distribution by using the point angle and the stopping time.

11. The generator of claim 9, wherein the generating unit isolates the water stream at a pitch interval of the spiral path on the spiral path,
the generating unit determines a discharging position of the water stream by using a point of the pitch interval rather than a line.

12. The generator of claim 11, wherein the generating unit forcibly isolates the water stream at the pitch interval of the spiral path even in an environment where discharging water from the water gun is performed continuously rather than discretely.

13. A generator as a computer system that communicates with a display generation component, the generator comprising:
at least one processor; and
a memory storing at least one program,
wherein the at least one program is configured to be executed by the at least one processor, and
the at least one program comprises:
an instruction for obtaining water discharging information including characteristic information of a water gun, a position of a fire spot, and a water discharging amount; and
an instruction for generating a trajectory of water discharged from the water gun that forms a water stream for suppressing a fire at the fire spot by using the water discharging information.

14. A generating method performed by a generator, the method comprising:
obtaining water discharging information including characteristic information of a water gun, a position of a fire spot, and a water discharging amount;
calculating a pan-tilt angle of the water gun that allows a water stream to pass through the position of the fire spot; and
generating a pan-tilt trajectory of the water gun that forms the water stream for suppressing a fire at the fire spot by using the water discharging information and the pan-tilt angle.

15. The method of claim 14, wherein the calculating step outputs a first pan-tilt angle and a second pan-tilt angle, each passing through the position of the fire spot,
a water stream passing through the position of the fire spot by the first pan-tilt angle is defined as a first stream, and a water stream passing through the position of the fire spot by the second pan-tilt angle is defined as a second stream,
a normal vector perpendicular to a flame direction corresponding to a direction of a flame formed at the position of the fire spot is defined, and
an angle at which the first stream enters the position of the fire spot on the basis of the normal vector is defined as a first angle, and
when an angle at which the second stream enters the position of the fire spot on the basis of the normal vector is defined as a second angle,
the generating step generates a trajectory of water discharged from the water gun by using an angle that is closer to a vertical with respect to the normal vector among the first angle and the second angle.
